# EUROPÄISCHE PATENTSCHRIFT

(11) **EP 1 913 109 B1**
(45) Veröffentlichungstag und Bekanntmachung des Hinweises auf die Patenterteilung: **06.10.2010**
(21) Anmeldenummer: 06777913.2
(22) Anmeldetag: 21.07.2006
(51) Int. Cl.: C09J 7/02, B65D 77/20

(54) **SIEGELBARES LAMINAT FÜR WIEDERVERSCHLIESSBARE VERPACKUNG**
SEALABLE LAMINATE FOR RECLOSABLE PACKAGING
STRATIFIE SOUDABLE CONÇU POUR UN EMBALLAGE REFERMABLE

(30) Priorität: 28.07.2005 DE 102005035979
(43) Veröffentlichungstag der Anmeldung: 23.04.2008
(73) Patentinhaber: BASF SE, 67056 Ludwigshafen (DE)
(72) Erfinder: KIRSCH, Stefan, 55268 Nieder-Olm (DE); DRAGON, Andree, 67346 Speyer (DE); HOLZENKAMP, Uta, 67245 Lambsheim (DE); BEYERS, Cornelis, Petrus, 67122 Altrip (DE)
(86) Internationale Anmeldenummer: PCT/EP2006/064552
(87) Internationale Veröffentlichungsnummer: WO 2007/012621

(56) Entgegenhaltungen:
- WO-A2-96/08540
- DE-A1- 3 225 023
- US-A- 1 769 627

## Beschreibung

Die Erfindung betrifft ein Verfahren zur Herstellung eines mehrschichtigen Laminats aus
a) einem Träger
b) einer direkt auf den Träger aufgebrachten Haftklebstoffschicht und
c) einer direkt auf die Haftklebstoffschicht aufgebrachten Wachsschicht,
wobei die Haftklebstoffschicht durch Beschichtung mit einer wässrigen Haftklebstoffdispersion und die Wachsschicht anschließend durch Beschichten mit einer wässrigen Wachsdispersion hergestellt wird.
Wiederverschließbare Verpackungen sind lange bekannt. Bei derartige Verpackungen wird im allgemeinen ein Behälter (tray), der das zu verpackende Gut enthält, mit einer Deckelfolie dauerhaft versiegelt. Beim Öffnen der Verpackung wird nicht die Siegelschicht aufgerissen, sondern eine darüberliegende, schwächere, aber permanent klebrige Klebstoffschicht. Die permanent klebrige Klebstoffschicht gewährleistet ein wiederholbares Öffnen und Schließen der Verpackung. In WO 90/07427 und EP-A 1460117 werden wiederverschließbare Verpackungen beschrieben, die einen Haftklebstoff enthalten.

Zur Zeit vewendete Deckelfolien haben im allgemeinen einen sehr komplizierten Mehrschichtaufbau. Auf einem Träger, z. B. aus Polyester, befindet sich zunächst eine Klebstoffschicht, im allgemeinen ein Schmelzklebstoff (Hotmelt), daran schließt sich eine Migrationsbarriere an, welche verhindert, dass der Schmelzklebstoff in die benachbarten Schichten migriert oder gar in Kontakt mit dem zu verpackenden Gut kommt. Der Schichtaufbau wird mit einer siegelbaren Polyethylenschicht (hochmolekulares Polyethylen) abgeschlossen. Zwischen den Schichten werden im allgemeinen noch Primer-schichten benötigt, um die Haftung zu verbessern.

Der mit der Deckelfolie zu versiegelnde Behälter besteht insbesondere aus einer tiefgezogenen Polyesterfolie, insbesondere Polyethylentherephthalat (PET),mit einer Polyethylensiegelschicht.

Als Haftklebstoffe sollen möglichst auch solche auf Basis wässriger Dispersionen eingesetzt werden. Aus der Belgischen Patentschrift BE 1010387 ist die Verwendung von wässrigen Haftklebstoffdispersionen für die Klebstoffschicht bekannt. Die Siegelschicht besteht auf beiden Seiten insbesondere aus Polyvinylidenchlorid (PVDC). Chlorhaltige Verbindungen sind für Lebensmittelverpackungen unerwünscht. Siegelschichten aus chlorhaltigen Polymeren sollen daher vermieden werden. Aus der nicht vorveröffentlichten Patentanmeldung DE- A-10 2004 007 927.7 ist ein Verfahren zu Mehrfachbeschichtung von Trägern unter Verwendung einer Mehrfachkaskadendüse bekannt. Aus der DE 3225023 A1 ist ein Laminat bekannt, das als Bestandteil einer wiederverschließbaren Verpackung verwendet werden kann. Das Laminat besteht aus einer Folie, einem Haftkleber und einer Schutzschicht aus z.B. niedermolekularem Polyethylenwachs.

Gewünscht sind insbesondere wiederverschließbare Verpackungssysteme mit einem vereinfachten Aufbau; ein komplizierter Mehrschichtaufbau, insbesondere Migrationssperren, wie bei Schmelzklebstoffen üblich, sollen vermieden werden. Für die Verpackung von Lebensmitteln ist Geruchsfreiheit erforderlich, flüchtigen Bestandteile sollen möglichst nicht vorhanden sein; auf die Mitverwendung chlorhaltiger Verbindungen sollte verzichtete werden. Auch nach wiederholtem Öffnen und Schließen der Verpackung soll die Klebrigkeit möglichst stark bleiben.

Aufgabe der Erfindung waren daher geruchsfreie wiederverschließbare Verpackungen, insbesondere auch für Lebensmittel, mit vereinfachtem Aufbau und mit guten Dauergebrauchseigenschaften, insbesondere einer auch nach mehrmaligem Öffnen noch guten Verschließbarkeit, wobei auf chlorhaltige Polymere verzichtet werden soll.

Demgemäß wurde das oben definierte Verfahren zur Herstellung eines Laminats gefunden.

Das Laminat besteht aus
a) einem Träger
b) einer direkt auf den Träger aufgebrachten Haftklebstoffschicht und
c) einer direkt auf die Haftklebstoffschicht aufgebrachten Wachsschicht.

### Zum Träger

Bei dem Träger handelt es sich insbesondere um eine Metalllfolie, z. B. Aluminiumfolie, Polymerfolie oder auch um metallisierte Polymerfolien, insbesondere auch um Verbundfolien. Insbesondere kommen Polymerfolien, besonders bevorzugt transparente Polymerfolien in Betracht. Genannt seien z. B. Polyolefin- , Polyester- oder Polyacetatfolien.

Als Polyolefinfolien kommen z. B. solche aus Polyethylen, Polypropylen, insbesondere orientiertem Polypropylen in Betracht.

Bevorzugt sind Polyesterfolien, z.B. solche aus Phthalsäure- oder Terephthalsäureestern, besonders bevorzugt sind Folien aus Polyethylentherephthalat (PET).

Die Dicke des Trägers beträgt bevorzugt 1 bis 500 µm, besonders bevorzugt 5 bis 200 µm, besonders bevorzugt 20 bis 100 µm.

### Zur Haftklebstoffschicht

Auf den Träger ist eine Haftklebstoffschicht aufgebracht.

Der Haftklebstoff enthält vorzugsweise ein synthetisches Polymer, insbesondere ein Emulsionspolymerisat als Bindemittel.

Bei dem Polymer handelt es sich insbesondere um ein durch radikalische Polymerisation von ethylenisch ungesättigten Verbindungen (Monomere) erhältliches Polymer, welches zu mindestens 60 Gew.-% aus sogenannten Hauptmonomeren, ausgewählt aus C₁ bis C₂₀ Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8C Atomen und ein oder zwei Doppelbindungen oder Mischungen dieser Monomeren, aufgebaut ist.

Das Polymer besteht vorzugsweise zu mindestens 60 Gew.-%, insbesondere zu mindestens 80 Gew.-%, besonders bevorzugt zu mindestens 90 Gew.-% aus sogenannten Hauptmonomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Insbesondere ist das Polymer zu mindestens 60 Gew.-%, besonders bevorzugt zu mindestens 80 Gew.-% und ganz besonders bevorzugt zu mindestens 95 Gew.-% aus C₁ bis C₂₀ Alkyl(meth)acrylaten aufgebaut.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Als weitere Monomere seien auch vernetzende Monomere genannt.

Das Polymer kann insbesondere hydrophile Gruppen ausgewählt aus Carbonsäuregruppen, Hydroxylgruppen, Aminogruppen und Carbonsäureamidgruppen enthalten. Der Gehalt dieser hydrophilen Gruppen kann insbesondere 0,001 bis 0,5 Mol auf 100 g Polymer betragen. Der Gehalt ist besonders bevorzugt mindestens 0,005 Mol besonders bevorzugt mindestens 0,008 Mol und maximal 0,2 Mol insbesondere maximal 0,1 Mol, ganz besonders bevorzugt maximal 0,05 bzw. 0,03 Mol auf 100 g/Polymer.

Besonders bevorzugt sind die hydrophilen Gruppen ausgewählt aus Carbonsäuregruppen, Hydroxylgruppen und Carbonsäureamidgruppen. Besonders bevorzugt sind Carbonsäuregruppen.

Unter Carbonsäuregruppen werden auch Salze der Carbonsäuregruppen verstanden. Im Falle der Salze handelt es sich bevorzugt um Salze mit flüchtigen Basen, z.B. Ammoniak.

Die hydrophilen Gruppen können durch Copolymerisation der entsprechenden Monomere an das Polymer gebunden werden.

Bevorzugte Monomere mit hydrophilen Gruppen sind die oben genannten Monomere mit Carbonsäuregruppen und Hydroxylgruppen, insbesondere z.B. Acrylsäure.

Die Herstellung der Polymere erfolgt in einer bevorzugten Ausführungsform durch Emulsionspolymerisation, es handelt sich daher um ein Emulsionspolymerisat in Form einer wässrigen Polymerdispersion.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄-bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 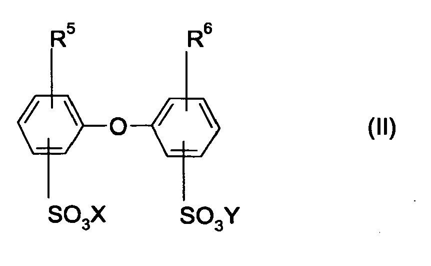 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax^{®}2 A1, Emulan^{®} NP 50, Dextrol^{®} OC 50, Emulgator 825, Emulgator 825 S, Emulan^{®}OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z.B. in Mengen von 0 bis 0,8 Gew.-Teile, bezogen auf 100 Gew.-Teile der zu polymerisierenden Monomeren durch die Molmasse verringert wird. Geeignet sind z.B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.
Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise kleiner 400 nm, insbesondere kleiner 200 nm. Besonders bevorzugt liegt die mittlere Teilchengröße zwischen 140 und 200 nm.

Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mäschtle, Makromolekulare Chemie 185 (1984), Seite 1025 -1039) bestimmt werden.

Der pH-Wert der Polymerdispersion wird vorzugsweise auf pH größer 4,5, insbesondere auf einen pH-Wert zwischen 5 und 8 eingestellt.

Die Glasübergangstemperatur des Polymeren, bzw. des Polymeren beträgt vorzugsweise -60 bis 0°C, besonders bevorzugt -60 bis -10°C und ganz besonders bevorzugt -60 bis -20°C.

Die Glasübergangstemperatur lässt sich nach üblichen Methoden wie Differentialthermoanalyse oder Differential Scanning Calorimetrie (s. z.B. ASTM 3418/82, sog. "midpoint temperature") bestimmen.

Der Haftklebstoffe kann allein aus dem Polymeren bzw. der wässrigen Dispersion des Polymeren bestehen.

Der Haftklebstoff kann weitere Zusatzstoffe enthalten, z.B. Füllstoffe, Farbstoffe, Verlaufsmittel, Verdicker oder Tackifier (klebrigmachende Harze).

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 0 bis 100 Gew.-Teile. besonders bevorzugt 0 bis 50 Gew.-Teile. bezogen auf 100 Gew.-Teile Polymer (fest/fest).

Vorzugsweise kann der Haftklebstoff Verlaufsmittel (z. B. Lumiten) enthalten, z.B. in Mengen von 0,05 bis 3 Gew.-Teilen auf 100 Gew.-Teile Polymer.

Für die Verwendung in wiederverschließbaren Verpackungen darf der Haftklebstoff keine zu große innere Festigkeit (Kohäsion) haben. Beim ersten Öffnen der Verpackung soll es zu einem Bruch möglichst in der Mitte der Haftklebstoffschicht (Kohäsionsbruch) kommen, so dass danach sowohl die Deckelfolie als auch der Behälterrand mit Haftklebstoff beschichtet sind und so eine gute Wiederverschließbarkeit gewährleistet wird.

Die Kohäsion und Adhäsion des Haftklebstoffs kann durch Auswahl geeigneter Polymere und gegebenenfalls geeigneter Additive, insbesondere Tackifier, so eingestellt werden, dass es zu einem Kohäsionsbruch kommt.

Die Scherfestigkeit als Maß für die Kohäsion wird gemäß nachfolgendem Test in Stunden bestimmt, sie ist vorzugsweise kleiner 5 Stunden.

Die Schälfestigkeit als Maß für die Adhäsion wird gemäß nachfolgendem Test bestimmt, sie ist vorzugsweise größer 10 N/25 mm.

Zur Bestimmung der Scher- und Schälfestigkeit wird der wässrige Haftklebstoff auf eine Polyethylenfolie in einer Menge von 20g (fest, ohne Wasser) /m2 aufgetragen und 3 Minuten bei 90°C getrocknet.

Zur Bestimmung der Scherfestigkeit werden Prüfstreifen mit einer Breite von 25 mm auf ein chromiertes V2A-Prüfblech geklebt (verklebte Fläche 25 mm2), mit einer 1 kg schweren Rolle 1 mal angerollt, 10 min gelagert (im Normklima, 1 bar, 21°C) und anschließend hängend mit einem 0,5 kg Gewicht belastet (im Normklima, 1 bar, 21 °C). Das maß für die Scherfestigkeit ist die zeit bis zum Abfallen des Gewichts, es wird der Durchschnitt aus 5 Messungen genommen.

Zur Bestimmung der Schälfestigkeit werden Prüfstreifen mit einer Breite von 25 mm auf ein chromiertes V2A-Prüfblech geklebt (verklebte Fläche 25 mm2), mit einer 1 kg schweren Rolle 1 mal angerollt, 10 min gelagert (im Normklima, 1 bar, 21°C) und anschließend mit einem Ende in die oberen Backen einer Zug-Dehnungs-Prüfapparatur eingespannt. Die Prüfstreifen werden mit 300 mm/min unter einem 180° Winkel von der Prüfflache abgezogen und der dazu benötigte Kraftaufwand gemessen. Das Mass für die Schälfestigkeit ist die Kraft in N/2,5 cm, die sich als Durchschnittswert aus fünf Messungen ergab.

Zur Herstellung der Haftklebstoffschicht auf dem Träger kann das Trägermaterial in üblicher Weise beschichtet werden. Übliche Auftragsmengen (nach Trocknung) sind z.B. 1 bis 50 g Haftklebstoff (trocken, ohne Wasser)/m².

### Zur Wachsschicht

Auf den Haftklebstoff wird als weitere Schicht eine Wachsschicht aufgebracht.

Als Wachse in Betracht kommen insbesondere Paraffinwachse und Polyethylenwachse.

Unter Paraffinwachsen (worunter auch Isoparaffine verstanden werden sollen) werden insbesondere bei Zimmertemperatur feste, im Bereich von 50 bis 80°C, bevorzugt 60 bis 75°C schmelzende Paraffine verstanden, d.h. es handelt sich um gesättigte Kohlenwasserstoffe, verzweigt oder unverzweigt, cyclisch oder vorzugsweise acyclisch, einzeln oder vorzugsweise als Gemisch von mehreren gesättigten Kohlenwasserstoffen. Paraffinwachse sind vorzugsweise gesättigte Kohlenwasserstoffe mit 18 bis 60 C-Atomen.

Unter Polyethylenwachs wird ein Polymer verstanden, welches vorzugsweise zu mindestens 30 Gew. %, insbesondere zu mindestens 50 Gew. % und besonders bevorzugt zu mindestens 60 oder gar 70 Gew.% aus Ethylen besteht.

Das Polyethylenwachs kann neben Ethylen weitere Monomere als Aufbaukomponenten enthalten.

Genannt seien z.B. Olefine wie Propylen, 1-Buten, 1-Penten, 1-Hexen, 1-Octen oder 1-Decen, oder die bereits oben genannten Hauptmonomeren oder weiteren Monomeren.

Bevorzugt sind Polyethylenwachse mit einem Gehalt an polaren Gruppen, insbesondere Hydroxylgruppen, Aminogruppen, Säuregruppen oder Salzgruppen.

Vorzugsweise enthalten die Polyethylene Säuregruppen, insbesondere Carbonsäuregruppen.

Polare Gruppen, insbesondere Säuregruppen, können durch Copolymerisation mit entsprechenden Monomeren in das Polyethylen eingeführt werden.

In Betracht kommen insbesondere Mono- oder Dicarbonsäuren wie Acrylsäure, Methacrylsäure oder Maleinsäure.

Ein Gehalt an polaren Gruppen, z.B. Carbonsäuregruppen, im Polyethylen kann aber auch durch nachträgliche polymer-analoge Umsetzung, z.B. Oxidation mit Sauerstoff, erreicht werden.

Vorzugsweise hat das Polyethylenwachs einen Gehalt an polaren Gruppen (siehe oben), insbesondere von Säuregruppen besonders bevorzugt von Carbonsäuregruppen von 0,01 bis 1 Mol pro 100 g Polyethylen; der Gehalt beträgt besonders bevorzugt mindestens 0,2 Mol pro 100 g Polyethylen. Der Gehalt übersteigt im allgemeinen nicht 0,8 Mol, bzw. 0,6 Mol pro 100 g.

Das Polyethylenwachs hat vorzugsweise ein gewichtsmittleres Molekulargewicht Mw von 1000 bis 40 000 g/Mol, insbesondere von 1000 bis 20.000 g/Mol, besonders bevorzugt von 3000 bis 18.000 g/Mol und ganz besonders bevorzugt von 5.000 bis 15.000 g/Mol (bestimmt durch Gelpermeationschromatographie).

Bevorzugt haben die Polyethylene eine Dichte von 0,8 bis 1,0 g/cm3, bevorzugt von 0,90 bis 0,96 g/cm3 und besonders bevorzugt von 0,93 bis 0,95 g/cm3, gemessen bei 23°C. Die Schmelzviskositäten liegen bevorzugt im Bereich von 20 bis 20000 centri Stokes (cSt), bevorzugt im Bereich von 800 bis 2000 cSt, gemessen bei 120°C, das entspricht einem Molekulargewicht Mw von maximal 40000 g, bevorzugt maximal 10000 g und besonders bevorzugt maximal 7500 g. Die Molekulargewichtsverteilung liegt bevorzugt im Bereich von 2 bis 10. Die Schmelzpunkte liegen bevorzugt im Bereich von 60 bis 125°C, bevorzugt 80 bis 120°C.

Polyethylenwachse werden durch Polymerisation oder Copolymerisation von Ethylen hergestellt.

Die Verfahren zur Herstellung lassen sich grob in Niederdruckverfahren, durchgeführt bei 20 bis 100 bar, und Hochdruckverfahren, durchgeführt bei 500 bis 4000 bar, einteilen. Das Hochdruckverfahren ist ein radikalisches Polymerisationsverfahren, das im Allgemeinen ohne Katalysator auskommt. Zum Starten der radikalischen Kettenreaktion verwendet man meistens ein oder mehrere organische Peroxide, beispielsweise die Trigonox oder Perkadox -Marken der Akzo Nobel, oder aber Luft bzw. Luftsauerstoff. Der billigste und deshalb am weitesten verbreitete Radikalstarter ist Luft bzw. Luftsauerstoff.

Zur Einstellung des geeigneten Molekulargewichts kann man geeignete Molekulargewichtsregler verwenden.

Ein häufig verwendeter Regler ist Wasserstoff, der aber bei der Verwendung von Luft oder Luftsauerstoff als Radikalstarter zur Bildung von Knallgas führen kann und deshalb aus sicherheitstechnischen Gründen Bedenken hervorruft.

Weitere häufig verwendete Regler sind Kohlenmonoxid CO und Alkane wie beispielsweise Ethan oder Propan. Kohlenmonoxid ist stark giftig, so dass bei der Verwendung aufwendige Sicherheitsmaßnahmen erforderlich sind. Gasförmige Regler wie Ethan und Propan erfordern ebenfalls strenge Sicherheitsregeln.

Die Polyethylenwachse werden in Form einer wässrigen Dispersion verwendet.

Soweit der Gehalt an polaren Gruppen nicht ausreichend ist, das Polyethylen zu dispergieren, können dazu auch Emulgatoren und Schutzkolloide verwendet werden. In Betracht kommen z.B. die oben erwähnten Emulgatoren und Schutzkolloide.

Das Wachs liegt als wässrige Dispersion vor.

Zur Herstellung der Wachsschicht kann die Dispersion in üblicher Weise auf die Haftklebstoffschicht aufgebracht werden.. Die Schichtdicke der Wachsschicht soll ausreichend sein, dass der darunter liegende Haftklebstoff bedeckt ist, die äußere Schicht also blockfrei ist und die Dicke der Wachsschicht ausreicht für die spätere Siegelung. Im allgemeinen reichen dazu Auftragsmengen (nach Trocknung) von 1 bis 50 g Wachs (trocken, ohne Wasser)/m², besonders bevorzugt von 1 bis 20 g Wachs/m², ganz besonders bevorzugt 1 bis 10 g Wachs/m² aus.

### Zur Herstellung des Laminats

Die Herstellung der Haftklebstoffschicht erfolgt durch Beschichtung des Trägers mit dem wässrigen Haftklebstoff, wobei es sich um eine Haftklebstoffdispersion handelt, d.h. um eine Polymerdispersion, wie sie bei der Emulsionspolymerisation erhältlich ist und welche gegebenenfalls weitere Zusatzstoffe enthält, wie oben ausgeführt.

Auch die Herstellung der Wachsschicht erfolgt durch Beschichtung mit einer wässrigen Wachsdispersion.

Zwischen der Herstellung der Haftklebstoffschicht und der Wachsschicht kann zwischenzeitlich eine Trocknung erfolgen, ein derartiger Trocknungsschritt ist jedoch nicht notwendig.

Vorteilhafterweise kann die Herstellung der Haftklebstoffschicht und der Wachsschicht nass in nass erfolgt, das heißt, dass nach der Beschichtung der Haftklebstoffdispersion keine Trocknung erfolgt und unmittelbar danach die Beschichtung mit der Wachsdispersion erfolgt.

Insbesondere können die Haftklebstoffschicht und die Wachsschicht in einem Arbeitsschritt aufgebracht werden. Ein bahnförmiger Träger kann dabei kontinuierlich beschichtet werden, insbesondere kann dabei eine Mehrfachkaskadendüse verwendet werden, wie in DE- A-10 2004 007 927.7 beschrieben ist

### Zur Verwendung des Laminats

Das mehrschichtige Laminat kann als siegelbarer Bestandteil eines Verpackungssystems, z.B. als Deckelfolie, verwendet werden, insbesondere für wiederverschließbare Verpackungen.

Das erfindungsgemäße Laminat ist vorzugsweise mit Polyethylen siegelbar, das Laminat wird daher vorzugsweise zum Verschließen eines Behälters, welcher eine Siegelschicht aus Polyethylen aufweist, verwendet.

Siegelbar heißt, dass das mehrschichtige Substrat mit einem weiteren Substrat verbunden werden kann. Im allgemeinen wird eine derartige Verbindung (Siegelung) unter Druck- und/oder Temperaturerhöhung vorgenommen.

Insbesondere hat das weitere Substrat zumindest an den Stellen, an denen eine Verbindung mit dem Laminat erfolgen soll, d.h. an der Siegelnaht, eine äußere Beschichtung aus Polyethylen, insbesondere aus hochmolekularem, thermoplastischen Polyethylen. Insbesondere handelt es sich hierbei nicht um ein Polyethylenwachs, sondern um ein hochmolekulares Polyethylen. Das gewichtsmittlere Molgewicht Mw ist insbesondere größer 100 000 und besonders bevorzugt größer 500 000.

Die Siegelung, d. h. das Zusammenpressen der beiden Substrate erfolgt vorzugsweise bei einem Druck von 1 bis 20 bar besonders bevorzugt von 1 bis 5 bar, die Temperatur beträgt insbesondere 30 bis 200°C, besonders bevorzugt 70 bis 120°C, die Dauer ist insbesondere 0,5 bis 5, insbesondere 1 bis 2 Sekunden.

Beim weiteren Substrat handelt es sich insbesondere um einen offenen Behälter (tray) aus einem beliebigen Material, z. B. Kunststoff, insbesondere z. B. aus Polyester, z.B. PET, welches an den zu siegelnden Stellen, insbesondere am Rand mit Polyethylen beschichtet ist.

Derartige Behälter werden im allgemeinen durch Tiefziehen einer entsprechenden Folie, z.B. einer mit Polyethylen beschichteten Polyesterfolie hergestellt.

Möglich ist auch, das umgekehrt der Behälter aus dem mehrschichtigen Laminat gebildet wird und die zu versiegelnde Deckelfolie eine Beschichtung aus hochmolekularem Polyethylen hat.

Vorzugsweise wird das mehrschichtige Laminat zum Verpacken von Waren verwendet, insbesondere zum Verschließen eines Behälters, der die Waren enthält und eine siegelfähige Naht aus Polyethylen aufweist.

Bei den Waren handelt es sich insbesondere um Lebensmittel, z. B. Fleisch-, Wurst-, oder Käseprodukte.

Die mit dem erfindungsgemäßen Laminat hergestellten Verpackungen sind wiederverschließbar. Beim Erstmaligen Öffnen der Verpackung reißt nicht die Siegelnaht, sondern die schwächere Haftklebstoffschicht. Vorzugsweise kommt es zu einem Kohäsionsbruch in der Haftklebstoffschicht. Die Haftklebstoffschicht löst sich nicht an einer der Grenzflächen, die Trennung erfolgt vielmehr innerhalb der Haftklebstoffschicht, so dass danach die Außenflächen beider getrennter Substrate mit Haftklebstoff beschichtet sind. In diesem Fall sind beide Flächen klebrig.

Die Verpackung ist sehr oft wiederverschließbar, wobei die Festigkeit nach wiederholtem Verschließen kaum nachlässt.

Die Laminate haben einen einfachen Schichtaufbau, sind geruchsfrei und weitgehend frei von flüchtigen Bestandteilen. Sie eignen sich für die Verpackung von Lebensmitteln. Auf die Mitverwendung chlorhaltiger Verbindungen in den Laminaten oder Verpackungssystemen kann verzichtet werden. Die Laminate sind heißsiegelfähig. Sie eigenen sich als Deckelfolie für wiederverschließbare Verpackungen. Beim Öffnen der Verpackung kommt es insbesondere zu einem Köhäsionsbruch in der Haftklebstoffschicht. Die Verpackung lässt sich sehr häufig Öffnen und Schließen, sie hat eine gute Wiederverschließbarkeit.

### Beispiele

### Haftklebstoff

Als Haftklebstoff wurde Acronal® V 115, eine Polyacrylatdispersion der BASF verwendet.

### Polyethylenwachs:

Als Polyethylenwachs wurde eine wässrige Dispersion eine Ethylen/Acrylsäurecopolymeren, welche als Epotal ® DS 2343 von BASF erhältlich ist, verwendet.

### Herstellung des Laminats

Eine Polyesterfolie (Polyethylentherephthalat, PET, Hostafan BN 50) mit einer Schichtdicke von 51 µm wurde mit 20g Haftklebstoff (fest, ohne Wasser) beschichtet und 3 Minuten bei 90°C getrocknet.

Danach wurde die wässrige Polethylendispersion beschichtet (3g trocken/m2) und ebenfalls 3 Minuten bei 90°C getrocknet.

Der Schichtaufbau des Laminats war daher wie folgt:
Oberfolie (PET, Hostafan BN 50, 51 µm)
Acronal^{®} V 115, 20g/m²
Epotal^{®} 2343, 3g/m²

Prüfung des beschichteten Laminats auf Siegelbarkeit und Wiederverschließbarkeit:
Als Ergebnis erhält man auf der Aufwickelseite blockfestes, glasklares Laminat. Dieses Laminat wurde mit einer 300µ PET Folie (welche mit einer PE-Folie kaschiert ist) heißgesiegelt. Siegelbedingungen waren: 6 Bar, 1.5 Sek., 120 (trayseitig) / 80°C (deckelseitig)

Der so hergestellte, gesiegelte Verbund wurde einer Auftrennprüfung unterzogen. Dabei wurden die heiß gesiegelten Streifen mit einer Abzugsgeschwindigkeit vom 300mm/Min mehrfach aufgetrennt und mit einem Anrollgerät der Masse 2kg mit einer Geschwindigkeit von 10mm/Sek. wiederverklebt. Es ergaben sich folgende Klebewerte:

| Versuch | | Messwert | Bruchbild |
|---|---|---|---|
| 1. | Auftrennen | 6,75 N/25mm | Kohäsionsbruch |
| 2. | Auftrennen | 1,25 N/25mm | Kohäsionsbruch |
| 3. | Auftrennen | 1 N/25mm | Kohäsionsbruch |
| 4. | Auftrennen | 1 N/25mm | Kohäsionsbruch |
| 5. | Auftrennen | 0,75 N/25mm | Kohäsionsbruch |
| 6. | Auftrennen | 1 N/25mm | Kohäsionsbruch |
| 7. | Auftrennen | 0,75 N/25mm | Kohäsionsbruch |
| 8. | Auftrennen | 0,75 N/25mm | Kohäsionsbruch |
| 9. | Auftrennen | 0,5 N/25mm | Kohäsionsbruch |
| 10. | Auftrennen | 0,5 N/25mm | Kohäsionsbruch |

## Patentansprüche

1. Verfahren zur Herstellung eines mehrschichtigen Laminats aus
a) einem Träger
b) einer direkt auf den Träger aufgebrachten Haftklebstoffschicht und
c) einer direkt auf die Haftklebstoffschicht aufgebrachten Wachsschicht,
wobei die Haftklebstoffschicht durch Beschichtung mit einer wässrigen Haftklebstoffdispersion und die Wachsschicht anschließend durch Beschichten mit einer wässrigen Wachsdispersion hergestellt wird.

2. Verfahren gemäß Anspruch 1, **dadurch gekennzeichnet, dass** es sich bei dem Träger um eine transparente Polymerfolie, Metallfolie oder metallisierte Polymerfolie handelt.

3. Verfahren gemäß Anspruch 1 oder 2, **dadurch gekennzeichnet, dass** es sich bei dem Träger um eine Polyolefin- oder Polyesterfolie handelt.

4. Verfahren gemäß einem der Ansprüche 1 bis 3, **dadurch gekennzeichnet, dass** der Haftklebstoff der Schicht b) ein Emulsionspolymerisat als Bindemittel enthält.

5. Verfahren gemäß einem der Ansprüche 1 bis 4, **dadurch gekennzeichnet, dass** das Emulsionspolymerisat zu mindestens 40 Gew.-% aus einem C1 bis C20 Alkyl(meth)acrylat besteht.

6. Verfahren gemäß einem der Ansprüche 1 bis 5, **dadurch gekennzeichnet, dass** die Wachsschicht c) aus einem Polyolefinwachs besteht.

7. Verfahren gemäß einem der Ansprüche 1 bis 5, **dadurch gekennzeichnet, dass** es sich bei dem Polyolefinwachs um ein Polymer handelt, welches zu mindestens 30 Gew.-% aus Ethylen besteht.

8. Verfahren zur Herstellung eines mehrschichtigen Laminats gemäß einem der vorhergehenden Ansprüche, **dadurch gekennzeichnet, dass** die Herstellung der Haftklebstoffschicht und der Wachsschicht nass in nass erfolgt, das heißt, dass nach der Beschichtung der Haftklebstoffdispersion keine Trocknung erfolgt und unmittelbar danach die Beschichtung mit der Wachsdispersion erfolgt.

9. Verfahren gemäß einem der vorhergehenden Ansprüche, **dadurch gekennzeichnet, dass** die Haftklebstoffschicht und die Wachsschicht in einem Arbeitsschritt kontinuierlich auf einen bahnförmigen Träger aufgebracht werden.

10. Verfahren gemäß Anspruch 9, **dadurch gekennzeichnet, dass** eine Mehrfachkaskadendüse verwendet wird.

## Claims

1. A method of producing a multilayer laminate composed of
a) a backing,
b) a pressure-sensitive adhesive layer applied directly to the backing, and
c) a wax layer applied directly to the pressure-sensitive adhesive layer,
the pressure-sensitive adhesive layer being produced by coating with an aqueous dispersion of pressure-sensitive adhesive and thereafter the wax layer being produced by coating with an aqueous wax dispersion.

2. The method according to claim 1, wherein said backing is a transparent polymer film, metal foil or metallized polymer film.

3. The method according to claim 1 or 2, wherein said backing is a polyolefin or polyester film.

4. The method according to any one of claims 1 to 3, wherein the pressure-sensitive adhesive of layer b) comprises an emulsion polymer as binder.

5. The method according to any one of claims 1 to 4, wherein the emulsion polymer is composed of at least 40% by weight of a C1 to C20 alkyl (meth)acrylate.

6. The method according to any one of claims 1 to 5, wherein the wax layer c) is composed of a polyolefin wax.

7. The method according to any one of claims 1 to 5, wherein said polyolefin wax is a polymer composed of at least 30% by weight of ethylene.

8. The method of producing a multilayer laminate according to any one of the preceding claims, wherein the pressure-sensitive adhesive layer and the wax layer are produced wet on wet, i.e., wherein no drying is carried out after the coating of the dispersion of pressure-sensitive adhesive, which is followed immediately by coating with the wax dispersion.

9. The method according to any one of the preceding claims, wherein the pressure-sensitive adhesive layer and the wax layer are applied continuously in one workstep to a backing in web form.

10. The method according to claim 9, wherein a multiple cascade die is used.

## Revendications

1. Procédé pour la production d'un stratifié multicouche à base
a) d'un support
b) d'une couche d'autoadhésif appliquée directement sur le support et
c) d'une couche de cire appliquée directement sur la couche d'autoadhésif, la couche d'autoadhésif étant produite par enduction avec une dispersion aqueuse d'autoadhésif et la couche de cire étant ensuite produite par enduction avec une dispersion aqueuse de cire.

2. Procédé selon la revendication 1, **caractérisé en ce que** le support consiste en un film de polymère transparent, une feuille de métal ou un film de polymère métallisé.

3. Procédé selon la revendication 1 ou 2, **caractérisé en ce que** le support consiste en un film de polyester ou de polyoléfine.

4. Procédé selon l'une quelconque des revendications 1 à 3, **caractérisé en ce que** l'autoadhésif de la couche b) contient en tant que liant un produit de polymérisation en émulsion.

5. Procédé selon l'une quelconque des revendications 1 à 4, **caractérisé en ce que** le produit de polymérisation en émulsion consiste à raison d'au moins 40 % en poids en un (méth)acrylate d'alkyle en C₁-C₂₀.

6. Procédé selon l'une quelconque des revendications 1 à 5, **caractérisé en ce que** la couche de cire c) consiste en une cire de polyoléfine.

7. Procédé selon l'une quelconque des revendications 1 à 5, **caractérisé en ce que** la cire de polyoléfine consiste en un polymère qui est constitué à raison d'au moins 30 % en poids d'éthylène.

8. Procédé pour la production d'un stratifié multicouche selon l'une quelconque des revendications précédentes, **caractérisé en ce que** la production de la couche d'autoadhésif et de la couche de cire s'effectue en humide-sur-humide, ce qui signifie qu'aucun séchage ne s'effectue après l'application de la dispersion d'autoadhésif et que l'enduction avec la dispersion de cire s'effectue immédiatement après.

9. Procédé selon l'une quelconque des revendications précédentes, **caractérisé en ce que** la couche d'autoadhésif er la couche de cire sont appliquées en continu, en une étape de travail, sur un support en forme de bande continue.

10. Procédé selon la revendication 9, **caractérisé en ce qu'**on utilise une buse multiple en cascade.
